(19) Europäisches Patentamt
European Patent Office
Office européen des brevets

(11) **EP 3 770 279 B1**

(12) **EUROPEAN PATENT SPECIFICATION**

(45) Date of publication and mention
of the grant of the patent:
**10.08.2022 Bulletin 2022/32**

(21) Application number: **19772137.6**

(22) Date of filing: **08.03.2019**

(51) International Patent Classification (IPC):
*C21C 5/46* (2006.01)      *C21C 5/28* (2006.01)
*C21C 7/00* (2006.01)      *C21C 5/35* (2006.01)
*C21C 5/40* (2006.01)      *F27B 3/28* (2006.01)
*F27D 19/00* (2006.01)      *F27D 21/00* (2006.01)
*C21C 5/30* (2006.01)

(52) Cooperative Patent Classification (CPC):
**C21C 5/35; C21C 5/30; C21C 5/40; C21C 5/4673;
F27B 3/28; F27D 19/00; F27D 21/00;**
F27D 21/0014; F27D 2019/0003; F27D 2019/0006;
F27D 2019/0015

(86) International application number:
**PCT/JP2019/009329**

(87) International publication number:
**WO 2019/181562 (26.09.2019 Gazette 2019/39)**

(54) **MOLTEN METAL COMPONENT ESTIMATION DEVICE, MOLTEN METAL COMPONENT ESTIMATION METHOD, AND MOLTEN METAL PRODUCTION METHOD**

METALLSCHMELZEKOMPONENTENSCHÄTZVORRICHTUNG, METALLSCHMELZEKOMPONENTENVERFAHREN UND METALLSCHMELZEHERSTELLUNGSVERFAHREN

DISPOSITIF D'ESTIMATION DE COMPOSANTS DE MÉTAL EN FUSION, PROCÉDÉ D'ESTIMATION DE COMPOSANTS DE MÉTAL EN FUSION ET PROCÉDÉ DE PRODUCTION DE MÉTAL EN FUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2018 JP 2018050330**

(43) Date of publication of application:
**27.01.2021 Bulletin 2021/04**

(73) Proprietor: **JFE Steel Corporation
Tokyo 100-0011 (JP)**

(72) Inventors:
• **KASE, Hiroto
Tokyo 100-0011 (JP)**
• **TOMIYAMA, Shinji
Tokyo 100-0011 (JP)**
• **TAKAHASHI, Yukio
Tokyo 100-0011 (JP)**
• **AMANO, Shota
Tokyo 100-0011 (JP)**

(74) Representative: **Haseltine Lake Kempner LLP
Bürkleinstrasse 10
80538 München (DE)**

(56) References cited:
**WO-A1-2015/045766      JP-A- 2017 008 349
JP-A- 2017 008 349      JP-A- 2017 089 001
JP-A- 2017 089 001**

**Description**

Field

The present invention relates to a molten metal component estimation device, a molten metal component estimation method, and molten metal production method. Background

At ironworks, a component concentration and temperature of a hot metal tapped out of a blast furnace are adjusted in refining facilities, such as pretreatment facilities, converters, and secondary refining facilities. The converter process, among others, is a process of blowing oxygen into the converter to remove impurities from the molten metal and raise temperature thereof, and plays a very important role in terms of, for example, quality control of steel and rationalization of refining cost. In controlling the component concentration and the temperature of the molten metal in the converter, for example, the flow rate and speed of the top-blown oxygen, the height of a top blowing lance, the flow rate of a bottom-blown gas, and the charge amount and charge timing of auxiliary raw materials, such as lime and iron ore, are used as manipulated variables. These manipulated variables should be optimized according to the component concentrations of the molten metal and slag. However, since an intense oxidation reaction occurs in the molten metal and the temperature of the molten metal becomes very high, the component concentrations of the molten metal and slag are difficult to be measured at every moment. Therefore, methods have been proposed so far to estimate the component concentrations of the molten metal and slag in real time using in-furnace physical reaction models and measurement information in the refining facilities.

Patent Literature 1 proposes a method for sequentially estimating an FeO concentration in the slag during the blowing process by calculating a fire spot reaction and a slag-metal interface reaction using the component concentrations and the flow rate of exhaust gas discharged from the converter and operation data. However, in general, the measurement information on the exhaust gas used for estimating the component concentration of the molten metal in the converter has larger errors. For example, in general, an orifice (throttle) and a Venturi tube are installed in an exhaust gas pipe, and the flow rate value of the exhaust gas is often estimated from a pressure drop between before and after the orifice. The pressure, the temperature, and the flow rate often undergo large variations, so that the errors in the measurement values tend to be large. From such a background, Patent Literature 2 proposes a method in which a coefficient for correcting the measured value is calculated based on past results regarding the flow rate of the exhaust gas in the steel refining process, and the coefficient is further corrected based on a molten metal analysis result obtained while the blowing is being performed, and a carbon concentration of the molten metal is calculated in real time based on that information.

Citation List

Patent Literature

Patent Literature 1: Japanese Patent Application Laid-open No. 2015-131999
Patent Literature 2: Japanese Patent Application Laid-open No. H09-272913 JP2017089001A and JP2017008349A disclose a molten metal state estimating device, a molten metal state estimating method, and a molten metal producing method for estimating the component concentration in a molten metal in a refining facility of the steel industry.

Summary

Technical Problem

However, in the method described in Patent Literature 1, when the decarburization rate and the oxidation rate of iron are calculated in the calculation of the fire spot reaction, the measured values of the exhaust gas flow rate and the component concentrations having the large errors are used as described above. Moreover, in the converter process, the model calculation values often deviate from true values due to unknown disturbances that cannot be represented by the physical model. Thus, in the method described in Patent Literature 1, it is conceivable that the estimation accuracy of the FeO concentration in the slag calculated by the fire spot and metal-slag interface reaction model often deteriorates.

Patent Literature 2 describes the method for correcting the measurement information on the exhaust gas, which corrects the flow rate of the exhaust gas based on the amount of carbon in the exhaust gas and the amount of carbon reduction in the molten metal by using component analysis information obtained by in-blow sampling of the molten metal. In the converter process, the sampling of the molten metal components is generally performed once or several times at the final stage of the blowing process. In the above-described method, a problem is considered in which the estimation accuracy of the molten metal components deteriorates before the in-blow sampling of the molten metal is performed, causing the execution timing of the in-blow sampling to deviate from a target value, and an operating action after the in-blow sampling is delayed.

The present invention has been made in view of the above problems, and an object of the present invention is to provide a molten metal component estimation device and a molten metal component estimation method that are able to estimate the component concentrations in the molten metal and the slag in an accurate and continuous manner. It is another object of the present invention to provide a molten metal production method that is able to produce the molten metal having a desired component concentration at high yield.

Solution to Problem

To solve the problem and achieve the object, a molten metal component estimation device according to the present invention includes: an input device configured to receive: first measurement results regarding temperature and a component concentration of a molten metal before a blowing process starts or during the blowing process in a refining facility; and second measurement results regarding a flow rate and a component concentration of an exhaust gas discharged from the refining facility; a model database configured to store model expressions and parameters regarding a blowing process reaction in the refining facility; a material input-output calculation unit configured to estimate an amount of carbon and an amount of oxygen charged into the refining facility and an amount of carbon and an amount of oxygen discharged from the refining facility by performing an input-output balance calculation of carbon and oxygen based on the first measurement results, the second measurement results, the model expressions and the parameters; a physical reaction model calculation unit configured to estimate at least one of an amount of oxygen and an amount of carbon remaining in the refining facility by calculating at least one of an FeO amount in a slag and a decarburization amount in the molten metal based on the first measurement results, the model expressions and the parameters; and a correction calculation unit configured to: calculate a parameter for correcting a measurement value of the flow rate of the exhaust gas, a parameter for correcting a measurement value of the component concentration of the exhaust gas, a parameter for correcting a calculation value of the FeO concentration in the slag and a parameter representing the amount of carbon in the molten metal as first, second, third and fourth correction parameters respectively, from the second measurement results received by the input device and using the estimation results of the material input-output calculation unit and the physical reaction model calculation unit; and estimate the component concentrations in the molten metal and the slag, using the calculated first, second, third and fourth correction parameters.

Moreover, in the molten metal component estimation device according to the present invention, the correction calculation unit is configured to calculate the first, second, third, and fourth correction parameters so as to minimize an evaluation function having terms including: a carbon input-output error representing a difference between: an amount that is obtained by subtracting the amount of carbon discharged out of the refining facility calculated from the second measurement results, from an initial amount of carbon in the molten metal calculated from the first measurement results and an amount of carbon supplied into the refining facility by a charged auxiliary raw material; and the fourth correction parameter; an oxygen input-output error representing a difference between: a value that is obtained by subtracting an amount of oxygen consumed by carbon oxidation in the molten metal calculated from the second measurement results, carbon monoxide oxidation in the refining facility calculated from the second measurement results and impurity metal oxidation in the molten metal, from an amount of oxygen supplied to the refining facility; and an amount of oxygen consumed by iron oxidation in the molten metal calculated by the model expressions; and a primary combustion input-output error representing a difference between: a primary combustion efficiency representing a percentage of an amount of oxygen consumed by the carbon oxidation in the molten metal to an amount that is obtained by subtracting an amount of oxygen consumed by iron oxidation and impurity metal oxidation, from a top-blown oxygen feed amount and an amount of oxygen supplied by the charged auxiliary raw material; and a standard value of the primary combustion efficiency.

Moreover, in the molten metal component estimation device according to the present invention, the correction calculation unit is configured to calculate the first, second, third, and fourth correction parameters so as to minimize an evaluation function having terms including: a carbon input-output error representing a ratio between: an amount that is obtained by subtracting the amount of carbon discharged out of the refining facility calculated from the second measurement results, from an initial amount of carbon in the molten metal calculated from the first measurement results and an amount of carbon supplied into the refining facility by a charged auxiliary raw material; and the fourth correction parameter; an oxygen input-output error representing a ratio between: a value that is obtained by subtracting an amount of oxygen consumed by carbon oxidation in the molten metal, carbon monoxide oxidation in the refining facility and impurity metal oxidation in the molten metal calculated from the second measurement results, from an amount of oxygen supplied to the refining facility; and an amount of oxygen consumed by iron oxidation in the molten metal calculated by a physical reaction model; and a primary combustion input-output error representing a ratio between: a primary combustion efficiency representing a percentage of an amount of oxygen consumed by the carbon oxidation in the molten metal to an amount that is obtained by subtracting an amount of oxygen consumed by iron oxidation and impurity metal oxidation, from a top-blown oxygen feed amount and an amount of oxygen supplied by the charged auxiliary raw material; and a standard value of the primary combustion efficiency.

Moreover, in the molten metal component estimation device according to the present invention, the evaluation function is a weighted sum including a square value of the carbon input-output error, a square value of the oxygen input-output error, and a square value of the primary combustion input-output error as terms.

Moreover, in the molten metal component estimation device according to the present invention, a constant representing a weight of each of the terms in the evaluation function is configured to switch when a condition is satisfied, the condition being set based on at least one of molten metal component estimation information and corrected exhaust gas measurement information calculated before a calculation target time during a calculation target heat.

Moreover, a molten metal component estimation method according to the present invention includes: an input step of receiving: first measurement results regarding temperature and a component concentration of a molten metal before a blowing process starts or during the blowing process in a refining facility; and second measurement results regarding a flow rate and a component concentration of an exhaust gas discharged from the refining facility; a material input-output calculation step of estimating an amount of carbon and an amount of oxygen charged into the refining facility and an amount of carbon and an amount of oxygen discharged from the refining facility by performing an input-output balance calculation of carbon and oxygen based on the first measurement results, the second measurement results, and model expressions and parameters regarding a blowing process reaction in the refining facility; a physical reaction model calculation step of estimating at least one of an amount of oxygen and an amount of carbon remaining in the refining facility by calculating at least one of an FeO amount in a slag and a decarburization amount in the molten metal based on the first measurement results, the model expressions, and the parameters; and a correction calculation step of: calculating a parameter for correcting a measurement value of the flow rate of the exhaust gas, a parameter for correcting a measurement value of the component concentration of the exhaust gas, a parameter for correcting a calculation value of the FeO concentration in the slag and a parameter representing the amount of carbon in the molten metal as first, second, third, and fourth correction parameters respectively, from the second measurement results received at the input step and using the estimation results obtained at the material input-output calculation step and the physical reaction model calculation step; and estimating the component concentrations in the molten metal and the slag, using the calculated first, second, third, and fourth correction parameters.

Moreover, a method of producing a molten metal according to the present invention includes a step of adjusting a component concentration in a molten metal within a desired range based on the component concentration in the molten metal estimated using the molten metal component estimation method as in claim 4, wherein the oxygen feed amount, the oxygen feed rate, and the agitation gas flow rate are controlled to keep the component concentration of the molten metal within a desired range.

Advantageous Effects of Invention

A molten metal component estimation device and a molten metal component estimation method according to the present invention are able to estimate the component concentrations in the molten metal and the slag in an accurate and continuous manner. A molten metal production method according to the present invention is able to produce the molten metal having a desired component concentration at high yield.

Brief Description of Drawings

FIG. 1 is a schematic diagram illustrating a configuration of a molten metal component estimation device as an embodiment of the present invention.
FIG. 2 is a flowchart illustrating a flow of a molten metal component estimation process as an embodiment of the present invention.
FIG. 3 is a diagram illustrating a relation between a decarburization efficiency and a degree of progress of blowing during the blowing process.

Description of Embodiment

The following describes in detail a molten metal component estimation device and operations thereof as an embodiment of the present invention with reference to the drawings.

[Configuration of molten metal component estimation device]

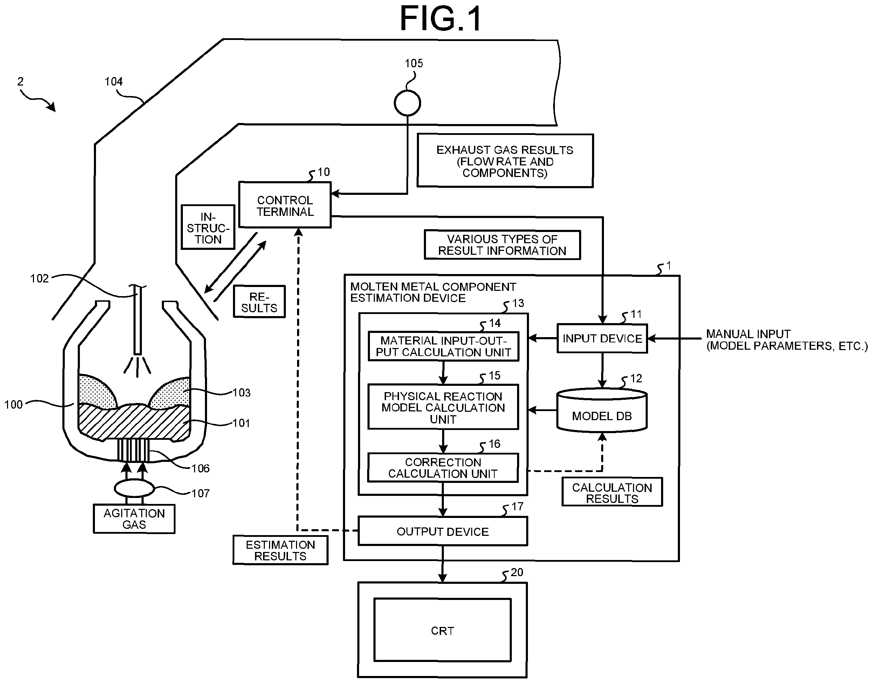

First, a configuration of the molten metal component estimation device as an embodiment of the present invention will be described with reference to FIG. 1.

FIG. 1 is a schematic diagram illustrating the configuration of the molten metal component estimation device as an embodiment of the present invention. As illustrated in FIG. 1, a molten metal component estimation device 1 as an embodiment of the present invention is a device that estimates component concentrations of a molten metal 101 and a slag 103 being processed in a refining facility 2 of a steel industry. The refining facility 2 includes a converter 100, a lance 102, and a duct 104. The lance 102 is disposed above the molten metal 101 in the converter 100. High-pressure oxygen (top-blown oxygen) is ejected from a distal end of the lance 102 toward the molten metal 101 below. Impurities in the molten metal 101 are oxidized by the high-pressure oxygen, and is taken into the slag 103 (blowing process). The duct 104 for guiding exhaust gas is provided above the converter 100.

An exhaust gas detecting unit 105 is disposed in the duct 104. The exhaust gas detecting unit 105 detects a flow rate of the exhaust gas discharged in association with the blowing process and components (for example, CO, $CO_2$, $O_2$, $N_2$, $H_2O$, Ar) in the exhaust gas. The exhaust gas detecting unit 105 measures the flow rate of the exhaust gas in the duct 104 based on, for example, differential pressure between before and after a Venturi tube provided in the duct 104. The exhaust gas detecting unit 105 measures each of the component concentrations [%] in the exhaust gas. The flow rate and the component concentrations of the exhaust gas are measured, for example, at intervals of several seconds. Signals representing the detection results of the exhaust gas detecting unit 105 are transmitted to a control terminal 10.

An agitation gas (bottom-blown gas) is blown into the molten metal 101 in the converter 100 through vent holes 106 formed at the bottom of the converter 100. The agitation gas is an inert gas, such as Ar. The blown-in agitation gas agitates the molten metal 101 to promote a reaction between the high-pressure oxygen and the molten metal 101. A flow meter 107 measures the flow rate of the agitation gas blown into the converter 100. The temperature and the component concentration of the molten metal 101 are analyzed immediately before the blowing process starts and after the blowing process. The temperature and the component concentration of the molten metal 101 are measured once or a plurality of times during the blowing process, and, for example, a supply amount (oxygen feed amount) and a rate (oxygen feed rate) of the high-pressure oxygen and the flow rate of the agitation gas (agitation gas flow rate) are determined based on the measured temperature and component concentration.

A blowing process control system to which the molten metal component estimation device 1 is applied includes the control terminal 10, the molten metal component estimation device 1, and a display device 20 as main components. The control terminal 10 is constituted by an information processing device, such as a personal computer or a workstation, and controls the oxygen feed amount, the oxygen feed rate, and the agitation gas flow rate so as to keep the component concentration of the molten metal 101 within a desired range, and collects data of actual values of the oxygen feed amount, the oxygen feed rate, and the agitation gas flow rate.

The molten metal component estimation device 1 is constituted by an information processing device, such as a personal computer or a workstation. The molten metal component estimation device 1 includes an input device 11, a model database (model DB) 12, an arithmetic processing unit 13, and an output device 17.

The input device 11 is an input interface that receives various measurement results and result information regarding the refining facility 2. The input device 11 includes, for example, a keyboard, a mouse, a pointing device, a data receiving device, and a graphical user interface (GUI). The input device 11 externally receives, for example, the result data and parameter setting values, and writes the received information to the model DB 12, and transmits it to the arithmetic processing unit 13. The input device 11 receives the measurement results regarding the temperature and the component concentration of the molten metal 101 obtained at least either one of before the start and during the blowing process in the refining facility 2. The measurement results regarding the temperature and the component concentration are supplied to the input device 11 through, for example, manual input by an operator or reading input from a recording medium. The input device 11 receives the result information from the control terminal 10. The result information includes, for example, the information on the flow rate and the component concentrations of the exhaust gas measured by the exhaust gas detecting unit 105, the information on the oxygen feed amount and the oxygen feed rate, the information on the agitation gas flow rate, information on charge amounts of raw materials (main raw material and auxiliary raw materials), and the temperature information on the molten metal 101.

The model DB 12 is a storage device that stores information on model expressions for a blowing process reaction in the refining facility 2. The model DB 12 stores parameters of the model expressions as information on the model expressions for the blowing process. The model DB 12 also stores various types of information received by the input device 11 and calculation/analysis results in blowing process results calculated by the arithmetic processing unit 13.

The arithmetic processing unit 13 is an arithmetic processing device, such as a central processing unit (CPU), and controls overall operations of the molten metal component estimation device 1. The arithmetic processing unit 13 has functions as a material input-output calculation unit 14, a physical reaction model calculation unit 15, and a correction calculation unit 16. For example, the arithmetic processing unit 13 executes computer programs to implement the material input-output calculation unit 14, the physical reaction model calculation unit 15, and the correction calculation unit 16. The arithmetic processing unit 13 executes a computer program for the material input-output calculation unit 14 to serve as the material input-output calculation unit 14, executes a computer program for the physical reaction model calculation unit 15 to serve as the physical reaction model calculation unit 15, and executes a computer program for the correction calculation unit 16 to serve as the correction calculation unit 16. The arithmetic processing unit 13 may include dedicated arithmetic devices or arithmetic circuits that serve as the material input-output calculation unit 14, the physical reaction model calculation unit 15, and the correction calculation unit 16.

The material input-output calculation unit 14 calculates a material input-output balance of components based on the operation result information, the molten metal component analysis information, the exhaust gas information, and the model information stored in the model DB 12. The material input-output balance calculation is for calculating the charge amount of each component into the converter 100 and the discharge amount of each component from the converter 100. The charge amount of each component is calculated from the charge amounts of the main raw material and the auxiliary raw materials into the converter 100, the oxygen supply from the lance 102, and an amount of air entrained from outside the converter 100. The discharge amount of each component is calculated from the exhaust gas flow rate and the exhaust gas component concentrations.

The physical reaction model calculation unit 15 calculates an FeO generation/reduction reaction amount in the slag 103 and a decarburization amount in the molten metal 101 based on the model information stored in the model DB 12 and the operation result information, and estimates an amount of iron oxidation in the molten metal 101, that is, an amount of oxygen remaining as FeO in the slag 103 in the converter 100 and an amount of carbon remaining in the molten metal 101.

Based on the calculation results by the material input-output calculation unit 14 and the physical reaction model calculation unit 15, the correction calculation unit 16 calculates a correction parameter for the exhaust gas flow rate, correction parameters for CO and $CO_2$ concentrations in the exhaust gas, a correction parameter for an estimated FeO concentration value in the slag 103 obtained by the physical reaction model calculation unit 15, and the carbon concentration in the molten metal 101 at the time of the calculation, and uses the various calculated correction parameters to estimate the carbon concentration in the molten metal 101 and the FeO concentration in the slag 103.

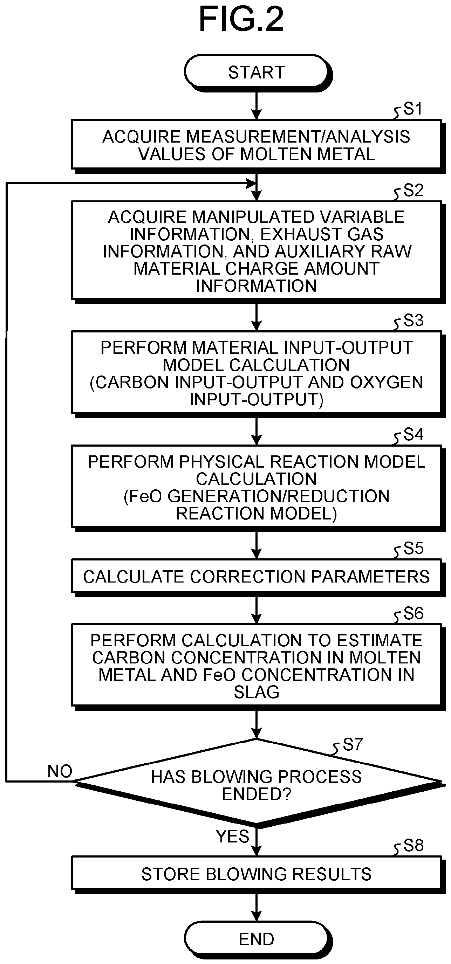

The molten metal component estimation device 1 having such a configuration executes a molten metal component estimation process described below to estimate the component concentrations in the molten metal and the slag in an accurate and continuous manner. The following describes, with reference to a flowchart illustrated in FIG. 2, the operations of the molten metal component estimation device 1 when performing the molten metal component estimation process.

[Molten metal component estimation process]

FIG. 2 is the flowchart illustrating the flow of the molten metal component estimation process as an embodiment of the present invention. The flowchart illustrated in FIG. 2 starts at the time when the blowing process has started, and the molten metal component estimation process proceeds to a process at Step S1.

In the process at Step S1, the arithmetic processing unit 13 acquires the measurement/analysis values of the molten metal 101. The arithmetic processing unit 13 acquires the measurement/analysis results obtained by the temperature measurement and the component analysis on a sample of the molten metal 101. Thus, the process at Step S1 is completed, and the molten metal component estimation process proceeds to a process at Step S2.

In the process at Step S2, the arithmetic processing unit 13 acquires manipulated variable information, the exhaust gas measurement/analysis information (exhaust gas information), and the auxiliary raw material charge amount information from the control terminal 10. In a normal converter blowing operation, the manipulated variable information and the measurement/analysis information are collected at regular intervals. In the present embodiment, for the sake of simplicity, the measurement/analysis information is assumed to be collected at intervals of 2 seconds. If a large time-lag is present between the time of acquisition of the manipulated variable information and the time of acquisition of the exhaust gas measurement/analysis information, the time-lag is taken into account (the exhaust gas measurement/analysis information is accelerated by the time-lag) to create the data. If the measurement value of the exhaust gas flow rate and the analysis values of CO and $CO_2$ include large amounts of noise, the measurement value and the analysis values may be replaced with values after being subjected to smoothing processing, such as moving average calculation. Thus, the process at Step S2 is completed, and the molten metal component estimation process proceeds to a process at Step S3.

In the process at Step S3, the material input-output calculation unit 14 uses the information acquired in the processes at Steps S1 and S2 and the information in the model DB 12 to perform the input-output balance calculation (material input-output model calculation) of carbon and oxygen. The amount of carbon charged into the converter 100 and the amount of carbon discharged out of the converter 100 are represented as Expressions (1) and (2), respectively, given below. Hereinafter, unless otherwise noted, the symbol % represents mass%, and various flow rates are represented in basic units of flow rate.

$$C_{in} = \frac{\left(\rho_{pig} \times W_{pig} + \Sigma_i \rho_i^{Cscr} \times W_i^{scr} + \Sigma_j \rho_j^{Caux} \times W_j^{aux}\right)}{W_{charge}} \tag{1}$$

$$C_{out} = \left(\frac{V_{CO}^{OG}}{2} + \frac{V_{CO_2}^{OG}}{2}\right) \times 12/11.2/10 \tag{2}$$

A charged amount of carbon $C_{in}$ [%] denotes a value obtained by converting the sum of the amount of carbon in the main raw material and the amount of carbon in the charged auxiliary raw materials into the concentration in the molten metal 101; $\rho_{pig}$ [%] denotes the carbon concentration in the charged hot metal; $\rho_i^{Cscr}$ [%] denotes the carbon concentration in charged scraps (brand i); $\rho_j^{Caux}$ [%] denotes the carbon concentration in the charged auxiliary raw material (brand j); $W_{pig}$ [t] denotes a weight of the charged hot metal; $W_i^{scr}$ [t] denotes a weight of the charged scraps (brand i); $W_j^{aux}$ [t] denotes an integrated weight of the charged auxiliary raw material (brand j); and $W_{charge}$ [t] denotes a weight of the molten metal charged into the converter 100. The carbon concentrations $\rho_i^{Cscr}$ and $\rho_j^{Caux}$ in the charged scraps of brand i and the charged auxiliary raw material of brand j are stored in the model DB 12, and the material input-output calculation unit 14 acquires information on the brands used in the target heats.

A discharged amount of carbon $C_{out}$ [%] denotes a value obtained by converting the amount of carbon contained in the exhaust gas into the concentration in the molten metal 101, and $V_{CO}^{OG}$ [Nm³/t] and $V_{CO_2}^{OG}$ [Nm³/t] denote integrated flow rates of CO and $CO_2$, respectively, in the exhaust gas until the time of calculation. An amount obtained by subtracting the discharged amount of carbon from the charged amount of carbon is the amount of carbon remaining in the converter 100, which corresponds to the carbon concentration in the molten metal 101. The charged and discharged amounts of carbon of the molten metal are assumed to be much smaller than the total amount of charge.

The amount of oxygen charged into the converter 100 and the amount of oxygen discharged out of the converter 100 are represented as Expressions (3) and (4), respectively, given below.

$$O_2^{in} = V_{O_2}^{blow} + \sum_j \rho_j^{Oaux} \times W_j^{aux} + \frac{21}{79} \times (V_{rem}^{OG} - V_{bot}) \tag{3}$$

$$O_2^{out} = \frac{V_{CO}^{OG}}{2} + V_{CO_2}^{OG} + V_{O_2}^{OG} \tag{4}$$

A charged amount of oxygen $O_2^{in}$ [Nm³/t] denotes the sum of an integrated amount of top-blown oxygen $V_{O_2}^{blow}$ [Nm³/t] from the lance 102, an integrated amount of oxygen in the charged auxiliary raw materials, and an integrated amount of oxygen in the air entrained from outside the converter 100 in to the converter, and $\rho_j^{Oaux}$ [(Nm³/t)/t] denotes a converted value of an oxygen content in the charged auxiliary raw material (brand i). The oxygen content $\rho_j^{Oaux}$ in the charged auxiliary raw material of brand j is stored in the model DB 12, and the material input-output calculation unit 14 acquires the information on the brands used in the target heats. If an exhaust gas analysis $N_2$ concentration and an exhaust gas analysis Ar concentration are not obtained in the charged oxygen amount calculation, the amount of oxygen in the entrained air may be calculated as represented by the third term of Expression (3) given above, on the assumption that an amount obtained by subtracting a bottom-blown gas amount $V_{bot}$ [Nm³/t] from an unanalyzed exhaust gas amount $V_{rem}^{OG}$ [Nm³/t] other than $O_2$, CO, and $CO_2$ in the exhaust gas corresponds to $N_2$ in the entrained air.

A discharged amount of oxygen $O_2^{out}$ [Nm³/t] is calculated from the amount of oxygen contained in the exhaust gas, and $V_{O_2}^{OG}$ [Nm³/t] denotes an integrated flow rate of $O_2$ in the exhaust gas until the time of calculation. An amount obtained by subtracting the amount of discharged oxygen from the amount of charged oxygen is the amount of oxygen remaining in the converter 100, and this oxygen is used for oxidation of metal impurities such as Si, Mn, and P in the molten metal 101 and oxidation of iron. Of these oxidations, the amount of oxidation of the metal impurities is calculated by an oxidation reaction model for impurity metals stored in the model DB 12, and, for example, an oxygen amount $V_{O_2}^{Si}$ [Nm³/t] used for Si oxidation in the molten metal 101 is represented as Expression (5) given below.

$$V_{O_2}^{Si} = \frac{\rho_{pig}^{Si} \times W_{pig} + \Sigma_i \rho_i^{Si\,scr} \times W_i^{scr} + \Sigma_j \rho_j^{Si\,aux} \times W_j^{aux}}{W_{charge}} \times exp\left(-A_{Si} \times V_{O_2}^{blow}\right) \times 22.4/28 \times 10$$

$$(5)$$

$\rho_{pig}^{Si}$ [%] denotes a Si concentration in the charged hot metal; $\rho_i^{Siscr}$ [%] denotes a Si concentration in the charged scraps (brand i); $\rho_j^{Siaux}$ [%] denotes a Si concentration in the charged auxiliary raw material (brand j); and $A_{Si}$ denotes an oxidation reaction rate constant of Si. In the same way as in Expression (5), amounts of oxygen used for oxidation of various metal impurities, such as Mn and P, in the molten metal 101 can also be calculated, and the total of the amounts is denoted as $V_{O_2}^{met}$ [Nm³/t] . Thus, the process at Step S3 is completed, and the molten metal component estimation process proceeds to a process at Step S4.

In the process at Step S4, the physical reaction model calculation unit 15 uses the information acquired in the processes at Steps S1 and S2 and the information in the model DB 12 to calculate the FeO generation/reduction reaction amount in the slag 103 and the decarburization amount in the molten metal 101, and estimates the amount of iron oxidation in the molten metal 101, that is, the amount of oxygen remaining as FeO in the slag 103 in the converter 100 and the amount of carbon remaining in the molten metal 101. An FeO generation rate $v_{FeO}$ [kg/min] is calculated by a physical reaction model (FeO generation/reduction reaction model) including terms representing the FeO generation/reduction reaction, and is represented as Expression (6) given below.

$$v_{FeO} = c_1 \times \frac{v_{O_2}^{blow}}{W_{charge}} \times \left(1 - \frac{R_0}{R}\right) \times \frac{1}{T_{hsp}} + c_2 \times \left(\frac{H}{D}\right)^{1.67} \times \varepsilon \times T_{bulk} \times \frac{1}{B} \qquad (6)$$

$C_1$ and $C_2$ denote an FeO generation coefficient and an FeO reduction coefficient, respectively; $v_{O_2}^{blow}$ [Nm³/Hr] denotes the oxygen feed rate from the lance 102; R [Nm³/s/m²] and $R_0$ [Nm³/s/m²] denote an oxygen load and a reference oxygen load; $T_{hsp}$ [°C] denotes fire spot temperature; H [m] denotes a bath depth of the molten metal 101; D [m] denotes a bath diameter of the molten metal 101; $\varepsilon$ [kW/t] denotes an agitation power density of the molten metal 101 caused by the oxygen feed from the lance 102 and the bottom-blown gas; $T_{bulk}$ [°C] denotes the temperature of the molten metal 101; and B denotes a degree of basicity of the slag 103 ($SiO_2$/CaO ratio in the slag component). The first term represents an FeO generation reaction rate, and the second term represents an FeO reduction reaction rate. $C_1$ and $C_2$ may be determined using the information acquired in the processes at Steps S1 and S2, or using the result information on the past heats stored in the model DB 12. As represented in Expression (7) given below, by integrating to accumulate the calculated FeO generation reaction rate, a cumulative FeO amount FeO [kg/t] is calculated, and the amount of oxygen remaining in the converter 100 is calculated.

$$FeO = \int v_{FeO}/60/W_{charge}\, dt \qquad\qquad (7)$$

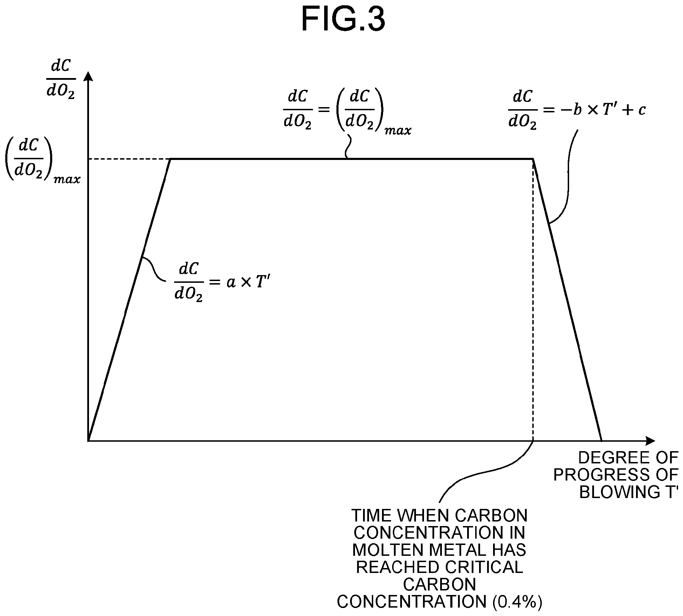

The decarburization amount in the molten metal 101 can be calculated using a physical model representing a decarburization efficiency during the blowing process. The decarburization efficiency $dC/dO_2$ [$10^{-3}$%/(Nm³/t)] during the blowing process represents a reduction efficiency of the carbon concentration in the molten metal 101 with respect to the oxygen feed amount from the lance 102 and the amount of oxygen supplied by the charging of the auxiliary raw materials. FIG. 3 is a diagram illustrating a relation between the decarburization efficiency and a degree of progress of blowing during the blowing process. As illustrated in FIG. 3, at an initial stage of the blowing process, the decarburization efficiency $dC/dO_2$ increases at a gradient a with respect to a degree of progress of blowing T', and reaches a maximum value $(dC/dO_2)_{max}$. Then, after the carbon concentration in the molten metal 101 reaches a critical concentration (approximately 0.4%), the decarburization efficiency $dC/dO_2$ decreases at a gradient b with respect to the degree of progress of blowing T'. The gradients a and b of the increase and the decrease of the decarburization efficiency $dC/dO_2$, an intercept c, and the maximum value $(dC/dO_2)_{max}$ can be determined using the information acquired in the processes at Steps S1 and S2, or using the result information on the past heats stored in the model DB 12. If the carbon concentration in the molten metal 101 is in a low concentration region (< approximately 0.25%), they can be calculated using a relation between the decarburization efficiency $dC/dO_2$ and a carbon concentration $C_s$ in the molten metal 101 represented by Expression (8) given below (decarburization model).

$$\frac{dC}{dO_2} = 107 \times \left(1 - exp\left(\frac{m_3 - C_S \times 1000}{m_1 \times W_{slg} + m_2}\right)\right) \tag{8}$$

In the decarburization model represented by Expression (8), the decarburization efficiency $dC/dO_2$ depends on the carbon concentration $C_s$ [%] in the molten metal 101. $W_{slg}$ [kg/t] denotes a weight of the slag 103, and $m_1$, $m_2$ and $m_3$ denote constants. Thus, the process at Step S4 is completed, and the molten metal component estimation process proceeds to a process at Step S5.

In the process at Step S5, the correction calculation unit 16 uses the information calculated in the processes at Steps S3 and S4 and the information in the model DB 12 to calculate the correction parameter for the exhaust gas flow rate, the correction parameters for the CO and $CO_2$ concentrations in the exhaust gas, the correction parameter for the estimated FeO concentration value in the slag 103 obtained by the physical reaction model calculation, and the carbon concentration in the molten metal 101.

[Correction parameter calculation example]

Specifically, the correction calculation unit 16 solves a nonlinear programming problem for minimizing an evaluation function J represented by Expression (9) below or minimizing the evaluation function J represented by Expression (10) below to calculate correction parameters $\alpha$, $\beta$, $\Delta$FeO, and [C]. $\alpha$ denotes a parameter for correcting the exhaust gas flow rate in the form of a product; $\beta$ denotes a parameter for correcting the CO and $CO_2$ concentrations in the exhaust gas in the form of a product; $\Delta$FeO denotes a parameter for correcting the estimated value of FeO in the slag 103 calculated by the process at Step S4 in the form of a sum; and [C] denotes a parameter representing the carbon concentration in the molten metal 101 at the time of the calculation. In addition, $()_{temp}$ denotes an amount of change in a certain period near the time of calculation. With the introduction of the correction parameters $\alpha$ and $\beta$, $O_2{}^{in}$ and $O_2{}^{out}$ given by Expressions (3) and (4) are represented as Expressions (11) and (12) given below. As represented by Expression (13) given below, $O_{2eff}$ [Nm$^3$/t] used in Expressions (9) and (10) is an amount obtained by subtracting amounts of oxygen consumed by impurity metal combustion and iron oxidation from the oxygen feed amount from the lance 102 and the amount of oxygen supplied by the charging of the auxiliary raw materials, that is, an amount of oxygen (effective amount of oxygen) used in a reaction of oxidizing the carbon in the molten metal 101 and oxidizing the generated CO so as to generate $CO_2$.

$$J = \frac{\{C_{in} - \alpha \times \beta \times C_{out} - [C]\}^2}{\sigma_1{}^2} + \frac{\{(O_2{}^{in} - O_2{}^{out}) - V_{O_2}^{met} - (FeO + \Delta FeO) \times 11.2/71.85\}^2}{\sigma_2{}^2}$$
$$+ \frac{\{\alpha \times \beta \times C_{out} \times 11.2/12 \times 10/O_{2eff} - R_{pri}\}^2}{\sigma_3{}^2}$$
$$+ \frac{\{\alpha - \alpha_{ave}\}^2 + \{\beta - \beta_{ave}\}^2}{\sigma_4{}^2} + \frac{\Delta FeO^2}{\sigma_5{}^2}$$
$$+ \frac{\left\{\alpha \times \beta \times (C_{out})_{temp} \times 1000/\left(V_{O_2}^{blow} + \sum_j \rho_j^{Oaux} \times W_j^{aux}\right)_{temp} - \frac{dC}{dO_2}\right\}^2}{\sigma_6{}^2}$$

$$\tag{9}$$

$$J = \frac{\left\{\frac{C_{i\,n} - \alpha \times \beta \times C_{out}}{[C]} - 1\right\}^2}{\sigma_1^2} + \frac{\left\{\frac{\left(O_2{}^{i\,n} - O_2{}^{out}\right) - V_{O_2}^{met}}{(FeO + \Delta FeO) \times 11.2/71.85} - 1\right\}^2}{\sigma_2^2}$$

$$+ \frac{\left\{\frac{\alpha \times \beta \times C_{out} \times 11.2/12 \times 10/O_{2\,eff}}{R_{pri}} - 1\right\}^2}{\sigma_3^2} + \frac{\left\{\frac{\alpha}{\alpha_{ave}} - 1\right\}^2 + \left\{\frac{\beta}{\beta_{ave}} - 1\right\}^2}{\sigma_4^2}$$

$$+ \frac{\Delta FeO^2}{\sigma_5^2}$$

$$+ \frac{\left\{\frac{\alpha \times \beta \times (C_{out})_{temp} \times 1000/\left(V_{O_2}^{blow} + \sum_j \rho_j^{Oaux} \times W_j^{aux}\right)_{temp}}{\frac{dC}{dO_2}} - 1\right\}^2}{\sigma_6^2}$$

$$(10)$$

$$O_2^{i\,n} = V_{O_2}^{blow} + \sum_j \rho_j^{Oaux} \times W_j^{aux} + \frac{21}{79} \times \left(\alpha \times V_{rem}^{OG} - V_{bot} + 2 \times \alpha \times (1 - \beta) \times \frac{V_{CO}^{OG} + V_{CO_2}^{OG}}{2}\right)$$

$$(11)$$

$$O_2^{out} = \alpha \times \beta \times \left(\frac{V_{CO}^{OG}}{2} + V_{CO_2}^{OG}\right) + \alpha \times V_{O_2}^{OG}$$

$$(12)$$

$$O_{2\,eff} = V_{O_2}^{blow} + \sum_j \rho_j^{Oaux} \times W_j^{aux} - V_{O_2}^{met} - (FeO + \Delta FeO) \times 11.2/71.85 - \alpha \times V_{O_2}^{OG}$$

$$(13)$$

The evaluation function J represented by Expression (9) is a weighted sum of terms that serves as an error indicator in the sixth term described below. The first term is a square value of a difference between the amount of carbon remaining in the converter 100 obtained by subtracting the discharged amount of carbon from the charged amount of carbon and [C], and a value of zero of this term indicates that the mass input-output balance of carbon is maintained in the converter 100. The second term is a square value of a difference between an amount obtained by subtracting the discharged amount of oxygen and the amount of oxygen used for the impurity metal oxidation from the charged amount of oxygen and the amount of oxygen used for the iron oxidation in the molten metal 101 calculated from the estimated value of FeO based on the physical reaction model, and a value of zero of this term indicates that the mass input-output balance of oxygen is maintained in the converter 100. The third term is a square value of a difference between a primary combustion efficiency represented by a percentage of an amount of oxygen used for oxidation (primary combustion) of the carbon in the molten metal 101 to the effective amount of oxygen and a standard value $R_{pri}$ of the primary combustion efficiency, and a value of approximately zero of this term indicates that the primary combustion efficiency calculated based on the manipulated variables and the exhaust gas information is approximately equal to the standard value. The fourth term is square values of differences each between $\alpha$ or $\beta$ and a standard value $\alpha_{ave}$ or $\beta_{ave}$ of $\alpha$ or $\beta$, and a value of approximately zero of this term indicates that $\alpha$ and $\beta$ are approximately equal to the standard values thereof. The fifth term is a square value of the correction parameter $\Delta FeO$, and is a term for preventing the calculated FeO concentration in the slag from deviating from the physical reaction model. The sixth term is a square value of a difference between the decarburization efficiency calculated from the exhaust gas information and the charged oxygen information near the time of the calculation and the decarburization efficiency based on the physical reaction model, and a value of zero of this term indicates that the measured decarburization amount is in line with the physical model.

In the same way, the evaluation function J represented by Expression (10) is also a weighted sum of terms that serves as an error indicator in the sixth term described below. The first term is a square value of a value obtained by subtracting one from a ratio between the amount of carbon remaining in the converter 100 obtained by subtracting the discharged amount of carbon from the charged amount of carbon and [C], and a value of zero of this term indicates that the mass input-output balance of carbon is maintained in the converter 100. The second term is a square value of a value obtained by subtracting one from a ratio between the amount obtained by subtracting the discharged amount of oxygen and the amount of oxygen used for the impurity metal oxidation from the charged amount of oxygen and the amount of oxygen used for the iron oxidation in the molten metal 101 calculated from the estimated value of FeO based on the physical reaction model, and a value of zero of this term indicates that the mass input-output balance of oxygen is maintained in the converter 100. The third term is a square value of a value obtained by subtracting one from a ratio between the primary combustion efficiency represented by the percentage of the amount of oxygen used for the oxidation (primary combustion) of the carbon in the molten metal 101 to the effective amount of oxygen and the standard value $R_{pri}$ of the primary combustion efficiency, and a value of approximately zero of this term indicates that the primary combustion efficiency calculated based on the manipulated variables and the exhaust gas information is approximately equal to the standard value. The fourth term is square values of values each obtained by subtracting one from a ratio between $\alpha$ or $\beta$ and the standard value $\alpha_{ave}$ or $\beta_{ave}$ of $\alpha$ or $\beta$, and a value of approximately zero of this term indicates that $\alpha$ and $\beta$ are approximately equal to the standard values thereof. The fifth term is the square value of the correction parameter $\Delta FeO$, and is a term for preventing the calculated FeO concentration in the slag from deviating from the physical reaction model. The sixth term is a square value of a value obtained by subtracting one from a ratio between the decarburization efficiency calculated from the exhaust gas information and the charged oxygen information near the time of the calculation and the decarburization efficiency based on the physical reaction model, and a value of zero of this term indicates that the measured decarburization amount is in line with the physical model.

In Expressions (9) and (10), $R_{pri}$, $\alpha_{ave}$, and $\beta_{ave}$ are determined from the results of the blowing processing mode similar to the estimation target heat among the blowing process results in the past heats stored in the model DB 12. If $R_{pri}$ can be described by, for example, the manipulated variables and blowing process conditions, it may be used.

In the above example, weighting factors ($\sigma_1$ to $\sigma_6$) present in denominators of the respective terms of the evaluation function J are parameters set by a user. Each of the weighting factors determines a degree of influence of an amount of error in a corresponding one of the above-described terms on the valuation function J. Accordingly, the estimation accuracy can be improved by changing the weighting factor of each of the terms according to the phase of reaction in the blowing process. For example, in the low concentration region of the carbon concentration in the molten metal or in a region where the decarburization efficiency is lower, the weighting factor $\sigma_6$ of the sixth term is changed to a smaller value in Expression (9) to increase the influence of the error in the sixth term on the evaluation function J, and thereby, can make an accurate estimation even though the carbon concentration in the molten metal is low. As described above, when a condition is satisfied that has been set based on at least one of the molten metal component estimation information and the corrected exhaust gas measurement information calculated before the calculation target time, the estimation accuracy is improved by switching the weight factor of each of the terms of the evaluation function J during the blowing process.

Various algorithms have been proposed for nonlinear programming problems for minimizing the evaluation function J under constraint conditions (refer, for example, to Non Patent Literature 1 (Hiroshi Konno and Hiroshi Yamashita, Nonlinear Programming, Union of Japanese Scientists and Engineers). The correction parameters $\alpha$, $\beta$, $\Delta FeO$, and [C] can be easily calculated using the algorithms. Thus, the process at Step S5 is completed, and the molten metal component estimation process proceeds to a process at Step S6.

In the process at Step S6, the correction calculation unit 16 uses the various correction parameters calculated in the process at Step S5 to estimate the carbon concentration in the molten metal 101 and the FeO concentration in the slag 103. Then, the arithmetic processing unit 13 transmits the estimation results of the carbon concentration in the molten metal 101 and the FeO concentration in the slag 103 estimated by the correction calculation unit 16 to the output device 17. The output device 17 outputs the estimation result of the carbon concentration in the molten metal 101 received from the arithmetic processing unit 13 to the control terminal 10 and the display device 20. The control terminal 10 adjusts the manipulated variables (for example, the oxygen feed amount and the charge amount and charge timing of the auxiliary raw materials) of the refining facility 2 based on the estimation result of the carbon concentration in the molten metal 101. The display device 20 displays the estimation results of the carbon concentration in the molten metal 101 and the FeO concentration in the slag 103. Thus, the process at Step S6 is completed, and the molten metal component estimation process proceeds to a process at Step S7.

In the process at Step S7, the arithmetic processing unit 13 determines whether the blowing process has been completed. If the result of the determination indicates that the blowing process has been completed, the arithmetic processing unit 13 ends the series of molten metal component estimation processes, and the arithmetic processing unit 13 performs a process at Step S8. If, instead, the blowing process has not ended, the arithmetic processing unit 13 returns the processing to the process at Step S2.

In the process at step S8, the arithmetic processing unit 13 stores the result data of the target heat and the calculation results of the arithmetic processing unit 13 in the model DB 12. If the measurement values of the carbon concentration in the molten metal 101 and the FeO concentration in the slag 103 at the end of the target blowing process have been obtained, these values are used to calculate various optimal correction parameters and initial parameter conditions. If error factors are present regarding elements, such as the carbon concentration analysis value $\rho_{pig}$ in the charged hot metal and the integrated weight $W_j^{aux}$ of the charged auxiliary raw material, that are not treated as the correction items in the present embodiment, correction parameters satisfying the components of the molten metal 101 and the component of the slag 103 at the end of the blowing process are calculated and stored in the model DB 12 in the process at Step S8 so as to be allowed to be used as initial correction parameters in the subsequent heat. Thus, the process at Step S8 is completed, and the series of molten metal component estimation processes end.

As is clear from the above description, in the molten metal component estimation process as an embodiment of the present invention, the molten metal component estimation device 1 sequentially calculates the correction parameters for correcting the measurement values of the flow rate and the component concentrations of the exhaust gas and the calculation values of the physical reaction model, based on the physical reaction model expressions, the measurement result of the component concentration of the molten metal, and the measurement results of the flow rate and the component concentrations of the exhaust gas discharged from the refining facility, so as to continuously maintain the carbon input-output balance and the oxygen input-output balance during the blowing process. As a result, the accurate estimated values of the component concentrations in the molten metal and the slag can be sequentially obtained during the blowing process.

While the embodiment to which the invention made by the present inventors is applied has been described, the present invention is not limited to the description and the drawings constituting a part of the disclosure of the present invention by way of the present embodiment. For example, in the present embodiment, the exhaust gas information has been used as the converter measurement information that can be continuously acquired. If, for example, measurement information on the molten metal temperature is obtainable, the molten metal temperature can be continuously estimated, and, in addition, the estimation accuracy of the component concentrations of the molten metal and the slag is expected to be improved by incorporating a relational expression combined with a heat input-output balance model based on an amount of heat generated by the oxidation reaction in the converter.

Industrial Applicability

The present invention can provide a molten metal component estimation device and a molten metal component estimation method that are able to estimate the component concentrations in the molten metal and the slag in an accurate and continuous manner.

Reference Signs List

1    Molten metal component estimation device

2      Refining facility
10     Control terminal
11     Input device
12     Model database (model DB)
13     Arithmetic processing unit
14     Material input-output calculation unit
15     Physical reaction model calculation unit
16     Correction calculation unit
17     Output device
20     Display device
100    Converter
101    Molten metal
102    Lance
103    Slag
104    Duct
105    Exhaust gas detecting unit
106    Vent holes
107    Flow meter

**Claims**

1. A molten metal component estimation device (1) comprising:

   an input device (11) configured to receive:

   first measurement results regarding temperature and a component concentration of a molten metal before a blowing process starts or during the blowing process in a refining facility; and
   second measurement results regarding a flow rate and a component concentration of an exhaust gas discharged from the refining facility;

   a model database (12) configured to store model expressions and parameters regarding a blowing process reaction in the refining facility;
   a material input-output calculation unit (14) configured to estimate an amount of carbon and an amount of oxygen charged into the refining facility and an amount of carbon and an amount of oxygen discharged from the refining facility by performing an input-output balance calculation of carbon and oxygen based on the first measurement results, the second measurement results, the model expressions and the parameters;
   a physical reaction model calculation unit (15) configured to estimate at least one of an amount of oxygen and an amount of carbon remaining in the refining facility by calculating at least one of an FeO amount in a slag and a decarburization amount in the molten metal based on the first measurement results, the model expressions and the parameters; and
   a correction calculation unit (16) configured to:

   calculate a parameter for correcting a measurement value of the flow rate of the exhaust gas, a parameter for correcting a measurement value of the component concentration of the exhaust gas, a parameter for correcting a calculation value of the FeO concentration in the slag and a parameter representing the amount of carbon in the molten metal as first, second, third and fourth correction parameters respectively, from the second measurement results received by the input device and using the estimation results of the material input-output calculation unit and the physical reaction model calculation unit; and
   estimate the component concentrations in the molten metal and the slag, using the calculated first, second, third and fourth correction parameters.

2. The molten metal component estimation device according to claim 1, wherein the correction calculation unit is configured to calculate the first, second, third, and fourth correction parameters so as to minimize an evaluation function having terms including:

   a carbon input-output error representing a difference between:

   an amount that is obtained by subtracting the amount of carbon discharged out of the refining facility calculated from the second measurement results, from an initial amount of carbon in the molten metal calculated from the first measurement results and an amount of carbon supplied into the refining facility by a charged auxiliary raw material; and
   the fourth correction parameter;

   an oxygen input-output error representing a difference between:

   a value that is obtained by subtracting an amount of oxygen consumed by carbon oxidation in the molten metal calculated from the second measurement results, carbon monoxide oxidation in the refining facility calculated from the second measurement results and impurity metal oxidation in the molten metal, from an amount of oxygen supplied to the refining facility; and
   an amount of oxygen consumed by iron oxidation in the molten metal calculated by the model expressions; and

   a primary combustion input-output error representing a difference between:

   a primary combustion efficiency representing a percentage of an amount of oxygen consumed by the carbon oxidation in the molten metal to an amount that is obtained by subtracting an amount of oxygen consumed by iron oxidation and impurity metal oxidation, from a top-blown oxygen feed amount and an amount of oxygen supplied by the charged auxiliary raw material; and
a standard value of the primary combustion efficiency;
wherein the evaluation function is a weighted sum including a square value of the carbon input-output error, a square value of the oxygen input-output error, and a square value of the primary combustion input-output error as terms.

3. The molten metal component estimation device according to claim 1, wherein the correction calculation unit (16) is configured to calculate the first, second, third, and fourth correction parameters so as to minimize an evaluation function having terms including:

a carbon input-output error representing a ratio between:

an amount that is obtained by subtracting the amount of carbon discharged out of the refining facility calculated from the second measurement results, from an initial amount of carbon in the molten metal calculated from the first measurement results and an amount of carbon supplied into the refining facility by a charged auxiliary raw material; and
the fourth correction parameter;

an oxygen input-output error representing a ratio between:

a value that is obtained by subtracting an amount of oxygen consumed by carbon oxidation in the molten metal, carbon monoxide oxidation in the refining facility and impurity metal oxidation in the molten metal calculated from the second measurement results, from an amount of oxygen supplied to the refining facility; and
an amount of oxygen consumed by iron oxidation in the molten metal calculated by a physical reaction model; and

a primary combustion input-output error representing a ratio between:

a primary combustion efficiency representing a percentage of an amount of oxygen consumed by the carbon oxidation in the molten metal to an amount that is obtained by subtracting an amount of oxygen consumed by iron oxidation and impurity metal oxidation, from a top-blown oxygen feed amount and an amount of oxygen supplied by the charged auxiliary raw material; and
a standard value of the primary combustion efficiency;
wherein the evaluation function is a weighted sum including a square value of the carbon input-output error, a square value of the oxygen input-output error, and a square value of the primary combustion input-output error as terms.

4. A molten metal component estimation method comprising:

an input step (S1) of receiving:

first measurement results regarding temperature and a component concentration of a molten metal before a blowing process starts or during the blowing process in a refining facility; and
second measurement results regarding a flow rate and a component concentration of an exhaust gas discharged from the refining facility;

a material input-output calculation step (S3) of estimating an amount of carbon and an amount of oxygen charged into the refining facility and an amount of carbon and an amount of oxygen discharged from the refining facility by performing an input-output balance calculation of carbon and oxygen based on the first measurement results, the second measurement results, and model expressions and parameters regarding a blowing process reaction in the refining facility;
a physical reaction model calculation step (S4) of estimating at least one of an amount of oxygen and an amount of carbon remaining in the refining facility by calculating at least one of an FeO amount in a slag and a decarburization amount in the molten metal based on the first measurement results, the model expressions, and the parameters; and
a correction calculation step (S5) + (S6) of:

calculating a parameter for correcting a measurement value of the flow rate of the exhaust gas, a parameter for correcting a measurement value of the component concentration of the exhaust gas, a parameter for correcting a calculation value of the FeO concentration in the slag and a parameter representing the amount of carbon in the molten metal as first, second, third, and fourth correction parameters respectively, from the second measurement results received at the input step and using the estimation results obtained at the material input-output calculation step and the physical reaction model calculation step; and
estimating the component concentrations in the molten metal and the slag, using the calculated first, second, third, and fourth correction parameters.

5. The molten metal component estimation method according to claim 4, wherein the correction calculation step includes calculating the first, second, third, and fourth correction parameters so as to minimize an evaluation function having terms including:

a carbon input-output error representing a difference between:

an amount that is obtained by subtracting the amount of carbon discharged out of the refining facility calculated from the second measurement results, from an initial amount of carbon in the molten metal calculated from the first measurement results and an amount of carbon supplied into the refining facility by a charged auxiliary raw material; and
the fourth correction parameter;

an oxygen input-output error representing a difference between:

a value that is obtained by subtracting an amount of oxygen consumed by carbon oxidation in the molten metal calculated from the second measurement results, carbon monoxide oxidation in the refining facility calculated from the second measurement results and impurity metal oxidation in the molten metal, from an amount of oxygen supplied to the refining facility; and
an amount of oxygen consumed by iron oxidation in the molten metal calculated by the model expressions; and

a primary combustion input-output error representing a difference between:

a primary combustion efficiency representing a percentage of an amount of oxygen consumed by the carbon oxidation in the molten metal to an amount that is obtained by subtracting an amount of oxygen consumed by iron oxidation and impurity metal oxidation, from a top-blown oxygen feed amount and an amount of oxygen supplied by the charged auxiliary raw material; and
a standard value of the primary combustion efficiency;
wherein the evaluation function is a weighted sum including a square value of the carbon input-output error, a square value of the oxygen input-output error, and a square value of the primary combustion input-output error as terms.

6. The molten metal component estimation method according to claim 4, wherein the correction calculation step includes calculating the first, second, third, and fourth correction parameters so as to minimize an evaluation function having terms including:

a carbon input-output error representing a ratio between:

an amount that is obtained by subtracting the amount of carbon discharged out of the refining facility calculated from the second measurement results, from an initial amount of carbon in the molten metal calculated from the first measurement results and an amount of carbon supplied into the refining facility by a charged auxiliary raw material; and
the fourth correction parameter;

an oxygen input-output error representing a ratio between:

a value that is obtained by subtracting an amount of oxygen consumed by carbon oxidation in the molten metal, carbon monoxide oxidation in the refining facility and impurity metal oxidation in the molten metal calculated from the second measurement results, from an amount of oxygen supplied to the refining facility;

and

an amount of oxygen consumed by iron oxidation in the molten metal calculated by a physical reaction model; and

a primary combustion input-output error representing a ratio between:

a primary combustion efficiency representing a percentage of an amount of oxygen consumed by the carbon oxidation in the molten metal to an amount that is obtained by subtracting an amount of oxygen consumed by iron oxidation and impurity metal oxidation, from a top-blown oxygen feed amount and an amount of oxygen supplied by the charged auxiliary raw material; and
a standard value of the primary combustion efficiency;
wherein the evaluation function is a weighted sum including a square value of the carbon input-output error, a square value of the oxygen input-output error, and a square value of the primary combustion input-output error as terms.

7. The molten metal component estimation method according to claim 5 or 6, wherein a constant representing a weight of each of the terms in the evaluation function is configured to switch when a condition is satisfied, the condition being set based on at least one of molten metal component estimation information and corrected exhaust gas measurement information calculated before a calculation target time during a calculation target heat.

8. A method of producing a molten metal, the method comprising a step of adjusting a component concentration in a molten metal within a desired range based on the component concentration in the molten metal estimated using the molten metal component estimation method as claimed in claim 4, wherein the oxygen feed amount, the oxygen feed rate, and the agitation gas flow rate are controlled to keep the component concentration of the molten metal within the desired range.

**Patentansprüche**

1. Schätzvorrichtung (1) für Komponenten von geschmolzenem Metall, umfassend:

ein Eingabegerät (11), das für das Aufnehmen von Daten ausgelegt ist:

erste Messergebnisse bezüglich Temperatur und einer Komponentenkonzentration eines geschmolzenen Metalls, bevor der Blasprozess beginnt oder während des Blasprozesses in einer Raffinerieanlage; und
zweite Messergebnisse bezüglich einer Strömungsrate und einer Komponentenkonzentration eines Abgases aus der Raffinerieanlage;
eine Modelldatenbank (12), die zum Speichern von Modellausdrücken ausgelegt ist
und von Parametern bezüglich einer Blasprozessreaktion in der Raffinerieanlage;

eine Material-Eingabe-Ausgabe-Berechnungseinheit (14), die für Folgendes ausgelegt ist:

Abschätzen einer Kohlenstoffmenge und einer Sauerstoffmenge, die in die Raffinerieanlage eingespeist werden, und einer Kohlenstoffmenge und einer Sauerstoffmenge, die aus der Raffinerieanlage abgelassen werden, durch Ausführen einer Eingabe-Ausgabe-Gleichgewichtsberechnung von Kohlenstoff und Sauerstoff auf der Basis der ersten Messergebnisse, der zweiten Messergebnisse, der Modellausdrücke und der Parameter;
eine Berechnungseinheit (15) für physikalische Reaktionsmodelle, ausgelegt zum
Abschätzen von mindestens einer Sauerstoffmenge und einer Menge von Kohlenstoff, die in der Raffinerieanlage bleibt, durch Berechnen einer FeO-Menge in einer Schlacke und/oder einer Entkohlungsmenge im geschmolzenen Metall auf der Basis der ersten Messergebnisse, der Modellausdrücke und der Parameter; und

eine Korrekturberechnungseinheit (16), ausgelegt zum:

Berechnen eines Parameters zum Korrigieren eines Messwertes für die Strömungsrate des Abgases, eines Parameters zum Korrigieren eines Messwertes für die Abgas-Komponentenkonzentration, eines Parameters zum Korrigieren eines Berechnungswertes für die FeO-Konzentration in der Schlacke und eines Parameters, der die Kohlenstoffmenge im geschmolzenen Metall als ersten, zweiten, dritten bzw. vierten Korrekturparameter repräsentiert, aus den zweiten Messergebnissen, die vom Eingabegerät aufgenommen wurden, und unter Verwendung der Schätzergebnisse der Material-Eingabe-Ausgabe-Berechnungseinheit und der Berechnungseinheit für physikalische Reaktionsmodelle; und

Schätzen der Komponentenkonzentrationen im geschmolzenen Metall und der Schlacke unter Verwendung der berechneten ersten, zweiten, dritten und vierten Korrekturparameter.

2. Schätzvorrichtung für Komponenten von geschmolzenem Metall nach Anspruch 1, wobei die Korrekturberechnungseinheit dafür ausgelegt ist, den ersten, zweiten, dritten und vierten Korrekturparameter zu berechnen, um so eine Bewertungsfunktion zu minimieren, die Terme hat, welche umfassen:

einen Kohlenstoff-Eingabe-Ausgabe-Fehler, der eine Differenz repräsentiert zwischen:

einer Menge, die erhalten wird durch Subtrahieren der Kohlenstoffmenge, die aus der Raffinerieanlage abgelassen wird, berechnet aus den zweiten Messergebnissen, von einer Anfangsmenge von Kohlenstoff im geschmolzenen Metall, berechnet aus den ersten Messergebnissen, und einer Kohlenstoffmenge, die der Raffinerieanlage durch einen zugeführten Hilfsrohstoff zugeführt wurde; und
den vierten Korrekturparameter;

einen Sauerstoff-Eingabe-Ausgabe-Fehler, der eine Differenz repräsentiert zwischen:
einem Wert, der durch Subtrahieren einer Sauerstoffmenge, die durch Kohlenstoff-Oxidation in der Metallschmelze, berechnet aus den zweiten Messergebnissen, durch Kohlenmonoxid-Oxidation in der Raffinerieanlage verbraucht wird, berechnet aus den zweiten Messergebnissen, und Oxidation von Metallverunreinigungen in der Metallschmelze, von einer Sauerstoffmenge, die der Raffinerieanlage zugeführt wird; und
einer Sauerstoffmenge, die durch Eisen-Oxidation in der Metallschmelze verbraucht wird, berechnet durch die Modellausdrücke, und einen primären Verbrennungs-Eingabe-Ausgabe-Fehler, der eine Differenz repräsentiert zwischen:

einer primären Verbrennungseffizienz, die einen Prozentsatz einer Sauerstoffmenge repräsentiert, die durch die Kohlenstoff-Oxidation im geschmolzenen Metall verbraucht wird, zu einer Menge, die durch Subtrahieren einer Sauerstoffmenge, die durch Eisen-Oxidation und Oxidation von Metallverunreinigungen verbraucht wird, von einer von oben eingeblasenen Zufuhrmenge und einer Sauerstoffmenge, die durch das eingebrachte Hilfsrohmaterial zugeführt wird, erhalten wird; und
einem Standardwert der primären Verbrennungseffizienz;
wobei die Bewertungsfunktion eine gewichtete Summe ist, die einen quadrierten Wert des Kohlenstoff-Eingabe-Ausgabe-Fehlers, einen quadrierten Wert des Sauerstoff-Eingabe-Ausgabe-Fehlers und einen quadrierten Wert des primären Verbrennungs-Eingabe-Ausgabe-Fehlers als Terme enthält.

3. Schätzvorrichtung für Komponenten von geschmolzenem Metall nach Anspruch 1, wobei die Korrekturberechnungseinheit (16) dafür ausgelegt ist, den ersten, zweiten, dritten und vierten Korrekturparameter zu berechnen, um so eine Bewertungsfunktion zu minimieren, die Terme hat, welche umfassen:

einen Kohlenstoff-Eingabe-Ausgabe-Fehler, der ein Verhältnis repräsentiert zwischen:

einer Menge, die erhalten wird durch Subtrahieren der Kohlenstoffmenge, die aus der Raffinerieanlage abgelassen wird, berechnet aus den zweiten Messergebnissen, von einer Anfangsmenge von Kohlenstoff im geschmolzenen Metall, berechnet aus den ersten Messergebnissen, und einer Kohlenstoffmenge, die der Raffinerieanlage durch einen zugeführten Hilfsrohstoff zugeführt wurde; und
den vierten Korrekturparameter;

einen Sauerstoff-Eingabe-Ausgabe-Fehler, der ein Verhältnis repräsentiert zwischen:

einem Wert, der durch Subtrahieren einer Sauerstoffmenge, die durch Kohlenstoff-Oxidation in der Metallschmelze, Kohlenmonoxid-Oxidation in der Raffinerieanlage und Oxidation von Metallverunreinigungen im geschmolzenen Metall verbraucht wird, berechnet aus den zweiten Messergebnissen, von einer Sauerstoffmenge, die der Raffinerieanlage zugeführt wird; und
einer Sauerstoffmenge, die durch Eisen-Oxidation im geschmolzenen Metall verbraucht wird, berechnet durch ein physikalisches Reaktionsmodell; und

einen primären Verbrennungs-Eingabe-Ausgabe-Fehler, der ein Verhältnis repräsentiert zwischen:

einer primären Verbrennungseffizienz, die einen Prozentsatz einer Sauerstoffmenge repräsentiert, die durch die Kohlenstoff-Oxidation im geschmolzenen Metall verbraucht wird, zu einer Menge, die durch Subtrahieren einer Sauerstoffmenge, die durch Eisen-Oxidation und Oxidation von Metallverunreinigungen verbraucht wird, von einer von oben eingeblasenen Zufuhrmenge und einer Sauerstoffmenge, die durch das eingebrachte Hilfsrohmaterial zugeführt wird, erhalten wird; und
einem Standardwert der primären Verbrennungseffizienz;
wobei die Bewertungsfunktion eine gewichtete Summe ist, die einen quadrierten Wert des Kohlenstoff-Eingabe-Ausgabe-Fehlers, einen quadrierten Wert des Sauerstoff-Eingabe-Ausgabe-Fehlers und einen quadrierten Wert des primären Verbrennungs-Eingabe-Ausgabe-Fehlers als Terme enthält.

4. Schätzverfahren für Komponenten von geschmolzenem Metall, umfassend:

einen Eingabeschritt (S1) zur Aufnahme von:

ersten Messergebnissen bezüglich der Temperatur und der Komponentenkonzentration einer Metallschmelze vor Beginn eines Blasprozesses oder während des Blasprozesses in einer Raffinerieanlage; und
zweiten Messergebnissen bezüglich einer Durchsatzrate und einer Komponentenkonzentration eines aus der Raffinerie abgeleiteten Abgases aus der Raffinerieanlage;
einen Berechnungsschritt (S3) für den Materialinput und -output zur Schätzung einer Menge an Kohlenstoff und einer Menge an Sauerstoff, die der Raffinerieanlage zugeführt werden, und einer Menge an Kohlenstoff und einer Sauerstoffmenge, die aus der Raffinerie abgegeben werden, durch Ausführen einer Eingangs-Ausgangs-Bilanzberechnung von Kohlenstoff und Sauerstoff auf der Grundlage der ersten Messergebnisse, der zweiten Messergebnisse und Modellausdrücke und Parameter bezüglich einer Blasprozessreaktion in der Raffinationsanlage;
einen Berechnungsschritt (S4) für ein physikalisches Reaktionsmodell zum Schätzen mindestens einer Sauerstoffmenge und einer Kohlenstoffmenge, die in der Raffinierungsanlage verbleiben, durch Berechnen mindestens einer FeO-Menge in einer Schlacke und einer Entkohlungsmenge in der Metallschmelze auf der Grundlage der ersten Messergebnissen, der Modellausdrücke und der Parameter; und

einen Berechnungsschritt (S5) + (S6) zur Korrektur von Folgendem:

Berechnung eines Parameters zur Korrektur eines Durchsatzes des Abgases, eines Parameters zur Korrektur eines Messwerts für die KomponentenKonzentration des Abgases, eines Parameters zur Korrektur eines Berechnungswertes der FeO-Konzentration in der Schlacke und eines Parameters, der die Kohlenstoffmenge in der Metallschmelze repräsentiert, als erste, zweite, dritte bzw. vierte Korrekturparameter aus den im Eingabeschritt erhaltenen zweiten Messergebnissen und unter Verwendung der im Materialeingabe-Ausgabe-Berechnungsschritt und im Berechnungsschritt im physikalischen Reaktionsmodell; und
Abschätzung der Konzentrationen der Komponenten in der Metallschmelze und der Schlacke unter Verwendung der berechneten ersten, zweiten, dritten und vierten Korrekturparameter.

5. Verfahren zur Schätzung von Metallschmelzkomponenten nach Anspruch 4, wobei der Schritt der Korrekturberechnung die Berechnung des ersten, zweiten, dritten und vierten Korrekturparameters umfasst, um eine Bewertungsfunktion zu minimieren, die folgende Terme aufweist:

ein Kohlenstoff-Eingabe-Ausgabe-Fehler, der eine Differenz darstellt zwischen:

einem Betrag, der sich ergibt durch Subtraktion der Menge des aus der Raffinierungsanlage abgegebenen Kohlenstoffs, die aus den zweiten Messergebnissen berechnet wird, von einer anfänglichen Kohlenstoffmenge in der Metallschmelze, die aus den ersten Messergebnissen berechnet wird, und einer Kohlenstoffmenge, die der Raffinierungsanlage durch einen zugeführten Hilfsrohstoff zugeführt wird; und
den vierten Korrekturparameter;

einen Sauerstoff-Eingabe-Ausgabe-Fehler, der eine Differenz repräsentiert zwischen:

einem Wert, der aus der Subtraktion einer Sauerstoffmenge, die durch die Oxidation von Kohlenstoff in der Metallschmelze verbraucht wird, berechnet aus den zweiten Messergebnissen, der Oxidation von Kohlenmonoxid in der Raffinationsanlage, berechnet aus den zweiten Messergebnissen, und der Oxidation von Metallverunreinigungen in der Metallschmelze, von einer der Raffinierungsanlage zugeführten Sauerstoffmenge der Raffinierungsanlage erhalten wird; und

einer Menge an Sauerstoff, die durch Eisen-Oxidation in der Metallschmelze verbraucht wird, berechnet durch die Modellausdrücke; und

einen Input-Output-Fehler der Primärverbrennung, der eine Differenz repräsentiert zwischen:

einem primären Verbrennungswirkungsgrad, der einen Prozentsatz einer durch die Kohlenstoff-Oxidation in der Metallschmelze verbrauchten Sauerstoffmenge im Verhältnis zu einer Menge darstellt, die sich durch Subtraktion einer durch die Eisen-Oxidation und die Oxidation von Metallverunreinigungen verbrauchten Sauerstoffmenge ergibt, von einer von oben eingeblasenen Sauerstoffzufuhrmenge und einer Sauerstoffmenge, die von dem zugeführten Hilfsrohstoff erhalten wird; und
einem Standardwert für den primären Verbrennungswirkungsgrad;
wobei die Bewertungsfunktion eine gewichtete Summe ist, die einen quadrierten Wert des Kohlenstoff-Eingabe-Ausgabe-Fehlers, einen quadrierten Wert des Sauerstoff-Eingabe-Ausgabe-Fehlers und einen quadrierten Wert des primären Verbrennungs-Eingabe-Ausgabe-Fehlers als Terme enthält.

6. Verfahren zur Schätzung von Metallschmelzkomponenten nach Anspruch 4, wobei der Schritt der Korrekturberechnung die Berechnung des ersten, zweiten, dritten und vierten Korrekturparameters umfasst, um eine Bewertungsfunktion zu minimieren, die folgende Terme enthält:

einen Kohlenstoff-Eingabe-Ausgabe-Fehler, der ein Verhältnis repräsentiert zwischen:

einer Menge, die sich durch Subtraktion der
Menge des aus der Raffinerie ausgetragenen Kohlenstoffs, die aus den zweiten Messergebnissen berechnet wird, von einer anfänglichen Menge an Kohlenstoff in der Metallschmelze, die aus den ersten Messergebnissen berechnet wird, und einer Menge an Kohlenstoff, die der Raffinierungsanlage durch einen zugeführten Hilfsrohstoff zugeführt wird; und
dem vierten Korrekturparameter;

einen Sauerstoff-Eingabe-Ausgabe-Fehler, der ein Verhältnis repräsentiert zwischen:

einem Wert, der sich durch Subtraktion einer Sauerstoffmenge, die durch Kohlenstoff-Oxidation in der Metallschmelze, Kohlenmonoxid-Oxidation in der Raffinierungsanlage und Oxidation von Metallverunreinigungen in der Metallschmelze verbraucht wird, berechnet aus den zweiten Messergebnissen, von einer Sauerstoffmenge ergibt, die der Raffinierungsanlage zugeführt wird; und
eine durch die Eisen-Oxidation verbrauchte Sauerstoffmenge, die durch ein physikalisches Reaktionsmodell berechnet wird; und

einen primären Verbrennungs-Eingabe-Ausgabe-Fehler, der ein Verhältnis repräsentiert zwischen:

einem primären Verbrennungswirkungsgrad, der einen Prozentsatz einer Sauerstoffmenge, die durch die Kohlenstoff-Oxidation in der Metallschmelze verbraucht wird, zu einer Menge repräsentiert, die durch Subtraktion einer Sauerstoffmenge, die durch Eisen-Oxidation und Oxidation von Metallverunreinigungen verbraucht wird, von einer von oben eingeblasenen Sauerstoffzufuhrmenge und einer Sauerstoffmenge erhalten wird, die durch das zugeführte Hilfsrohmaterial zugeführt wird; und
einem Standardwert der primären Verbrennungseffizient;
wobei die Bewertungsfunktion eine gewichtete Summe ist, die einen quadrierten Wert des Kohlenstoff-Eingabe-Ausgabe-Fehlers, einen quadrierten Wert des Sauerstoff-Eingabe-Ausgabe-Fehlers und einen quadrierten Wert des primären Verbrennungs-Eingabe-Ausgabe-Fehlers als Terme enthält.

7. Verfahren zur Schätzung von Metallschmelzkomponenten nach Anspruch 5 oder 6, wobei eine Konstante, die ein Gewicht jedes der Terme in der Bewertungsfunktion darstellt, so ausgelegt ist, dass sie umschaltet, wenn eine Bedingung erfüllt ist, wobei die Bedingung auf der Grundlage von Informationen zur Schätzung von Metallschmelzkomponenten und/oder korrigierten Abgas-Messinformationen, die vor einer Berechnungszielzeit während einer Berechnungszielwärme berechnet wurden.

**8.** Verfahren zur Herstellung einer Metallschmelze, wobei das Verfahren einen Schritt des Einstellens einer Komponentenkonzentration in einer Metallschmelze innerhalb eines gewünschten Bereichs auf der Grundlage der Komponentenkonzentration in der Metallschmelze, die unter Verwendung des in Anspruch 4 beanspruchten Verfahrens zur Abschätzung der Komponenten der Metallschmelze geschätzt wird, umfasst, wobei die Sauerstoffzufuhrmenge, die Sauerstoffzufuhrrate und die Rührgasströmungsrate so gesteuert werden, dass die Komponentenkonzentration der Metallschmelze innerhalb des gewünschten Bereichs gehalten wird.

**Revendications**

**1.** Dispositif d'estimation de composants de métal en fusion (1) comprenant :

   un dispositif d'entrée (11) configuré pour recevoir :

      des premiers résultats de mesure concernant la température et la concentration de composants d'un métal en fusion avant le début d'un processus de soufflage ou pendant le processus de soufflage dans une installation d'affinage ; et
      des seconds résultats de mesure concernant un débit d'écoulement et une concentration de composants d'un gaz d'échappement évacué de l'installation d'affinage ;

   une base de données de modèles (12) configurée pour stocker des expressions de modèle et des paramètres concernant une réaction de processus de soufflage dans l'installation d'affinage ;
   une unité de calcul d'entrée-sortie de matériau (14) configurée pour estimer une quantité de carbone et une quantité d'oxygène fournies à l'installation d'affinage et une quantité de carbone et une quantité d'oxygène évacuées de l'installation d'affinage en effectuant un calcul d'équilibre d'entrée-sortie de carbone et d'oxygène sur la base des premiers résultats de mesure, des seconds résultats de mesure, des expressions de modèle et des paramètres ;
   une unité de calcul de modèle de réaction physique (15) configurée pour estimer au moins une parmi une quantité d'oxygène et une quantité de carbone restant dans l'installation d'affinage en calculant au moins une parmi une quantité de FeO dans un laitier et une quantité de décarburation dans le métal en fusion sur la base des premiers résultats de mesure, des expressions de modèle et des paramètres ; et
   une unité de calcul de correction (16) configurée pour :

      calculer un paramètre pour corriger une valeur de mesure du débit d'écoulement du gaz d'échappement, un paramètre pour corriger une valeur de mesure de la concentration de composants du gaz d'échappement, un paramètre pour corriger une valeur de calcul de la concentration de FeO dans le laitier et un paramètre représentant la quantité de carbone dans le métal en fusion en tant que premier, deuxième, troisième et quatrième paramètres de correction, respectivement, à partir des seconds résultats de mesure reçus par le dispositif d'entrée et en utilisant les résultats d'estimation de l'unité de calcul d'entrée-sortie de matériau et de l'unité de calcul de modèle de réaction physique ; et
      estimer les concentrations de composants dans le métal en fusion et le laitier, à l'aide des premier, deuxième, troisième et quatrième paramètres de correction calculés.

**2.** Dispositif d'estimation de composants de métal en fusion selon la revendication 1, dans lequel l'unité de calcul de correction est configurée pour calculer les premier, deuxième, troisième et quatrième paramètres de correction de manière à minimiser une fonction d'évaluation ayant des termes comprenant :

   une erreur d'entrée-sortie de carbone représentant une différence entre :

      une quantité qui est obtenue en soustrayant la quantité de carbone évacuée de l'installation d'affinage calculée à partir des seconds résultats de mesure, d'une quantité initiale de carbone dans le métal en fusion calculée à partir des premiers résultats de mesure et d'une quantité de carbone fournie à l'installation d'affinage par une matière première auxiliaire chargée ; et
      le quatrième paramètre de correction ;

   une erreur d'entrée-sortie d'oxygène représentant une différence entre :

      une valeur qui est obtenue en soustrayant une quantité d'oxygène consommée par oxydation de carbone dans le métal en fusion calculée à partir des seconds résultats de mesure, une oxydation de monoxyde de carbone dans l'installation d'affinage calculée à partir des seconds résultats de mesure et une oxydation de métal d'impureté dans le métal en fusion, à partir d'une quantité d'oxygène fournie à l'installation d'affinage ; et

une quantité d'oxygène consommée par oxydation de fer dans le métal en fusion calculée par les expressions de modèle ; et

une erreur d'entrée-sortie de combustion primaire représentant une différence entre :

une efficacité de combustion primaire représentant un pourcentage d'une quantité d'oxygène consommée par l'oxydation de carbone dans le métal en fusion par rapport à une quantité qui est obtenue en soustrayant une quantité d'oxygène consommée par oxydation de fer et oxydation de métal d'impureté, d'une quantité d'alimentation d'oxygène soufflé par le haut et d'une quantité d'oxygène fournie par la matière première auxiliaire chargée ; et

une valeur standard de l'efficacité de combustion primaire ;

dans lequel la fonction d'évaluation est une somme pondérée comprenant une valeur quadratique de l'erreur d'entrée-sortie de carbone, une valeur quadratique de l'erreur d'entrée-sortie d'oxygène, et une valeur quadratique de l'erreur d'entrée-sortie de combustion primaire en tant que termes.

3. Dispositif d'estimation de composants de métal en fusion selon la revendication 1, dans lequel l'unité de calcul de correction (16) est configurée pour calculer les premier, deuxième, troisième et quatrième paramètres de correction de manière à minimiser une fonction d'évaluation ayant des termes comprenant :

une erreur d'entrée-sortie de carbone représentant un rapport entre :

une quantité qui est obtenue en soustrayant la quantité de carbone évacuée de l'installation d'affinage calculée à partir des seconds résultats de mesure, d'une quantité initiale de carbone dans le métal en fusion calculée à partir des premiers résultats de mesure et d'une quantité de carbone fournie à l'installation d'affinage par une matière première auxiliaire chargée ; et

le quatrième paramètre de correction ;

une erreur d'entrée-sortie d'oxygène représentant un rapport entre :

une valeur qui est obtenue en soustrayant une quantité d'oxygène consommée par oxydation de carbone dans le métal en fusion, oxydation de monoxyde de carbone dans l'installation d'affinage et oxydation de métal d'impureté dans le métal en fusion calculée à partir des seconds résultats de mesure, d'une quantité d'oxygène fournie à l'installation d'affinage ; et

une quantité d'oxygène consommée par oxydation de fer dans le métal en fusion calculée par un modèle de réaction physique ; et

une erreur d'entrée-sortie de combustion primaire représentant un rapport entre :

une efficacité de combustion primaire représentant un pourcentage d'une quantité d'oxygène consommée par l'oxydation de carbone dans le métal en fusion par rapport à une quantité qui est obtenue en soustrayant une quantité d'oxygène consommée par oxydation de fer et oxydation de métal d'impureté, d'une quantité d'alimentation d'oxygène soufflé par le haut et d'une quantité d'oxygène fournie par la matière première auxiliaire chargée ; et

une valeur standard de l'efficacité de combustion primaire

dans lequel la fonction d'évaluation est une somme pondérée comprenant une valeur quadratique de l'erreur d'entrée-sortie de carbone, une valeur quadratique de l'erreur d'entrée-sortie d'oxygène, et une valeur quadratique de l'erreur d'entrée-sortie de combustion primaire en tant que termes.

4. Procédé d'estimation de composants de métal en fusion, comprenant

une étape d'entrée (S1) consistant à recevoir :

des premiers résultats de mesure concernant la température et la concentration de composants d'un métal en fusion avant le début d'un processus de soufflage ou pendant le processus de soufflage dans une installation d'affinage ; et

des seconds résultats de mesure concernant un débit d'écoulement et une concentration de composants d'un gaz d'échappement évacué de l'installation d'affinage ;

une étape de calcul d'entrée-sortie de matériau (S3) consistant à estimer une quantité de carbone et une quantité d'oxygène chargées dans l'installation d'affinage et une quantité de carbone et une quantité d'oxygène évacuées de l'installation d'affinage en effectuant un calcul d'équilibre d'entrée-sortie de carbone et d'oxygène sur la base des premiers résultats de mesure, des seconds résultats de mesure, et des expressions de modèle et paramètres concernant une réaction de processus de soufflage dans l'installation d'affinage ;

une étape de calcul de modèle de réaction physique (S4) configurée pour estimer au moins une parmi une quantité d'oxygène et une quantité de carbone restant dans l'installation d'affinage en calculant au moins une parmi une quantité de FeO dans un laitier et une quantité de décarburation dans le métal en fusion sur la base des premiers résultats de mesure, des expressions de modèle et des paramètres ; et

une étape de calcul de correction (S5) + (S6) consistant à :

calculer un paramètre pour corriger une valeur de mesure du débit d'écoulement du gaz d'échappement, un paramètre pour corriger une valeur de mesure de la concentration de composants du gaz d'échappement, un paramètre pour corriger une valeur de calcul de la concentration de FeO dans le laitier et un paramètre représentant la quantité de carbone dans le métal en fusion en tant que premier, deuxième, troisième et quatrième paramètres de correction, respectivement, à partir des seconds résultats de mesure reçus à l'étape d'entrée et en utilisant les résultats d'estimation obtenus à l'étape de calcul d'entrée-sortie de matériau et l'étape de calcul de modèle de réaction physique ; et

estimer les concentrations de composants dans le métal en fusion et le laitier, à l'aide des premier, deuxième, troisième et quatrième paramètres de correction calculés.

5. Procédé d'estimation de composants de métal en fusion selon la revendication 4, dans lequel l'étape de calcul de correction inclut un calcul des premier, deuxième, troisième et quatrième paramètres de correction de manière à minimiser une fonction d'évaluation ayant des termes comprenant :

une erreur d'entrée-sortie de carbone représentant une différence entre :

une quantité qui est obtenue en soustrayant la quantité de carbone évacuée de l'installation d'affinage calculée à partir des seconds résultats de mesure, d'une quantité initiale de carbone dans le métal en fusion calculée à partir des premiers résultats de mesure et d'une quantité de carbone fournie à l'installation d'affinage par une matière première auxiliaire chargée ; et

le quatrième paramètre de correction ;

une erreur d'entrée-sortie d'oxygène représentant une différence entre :

une valeur qui est obtenue en soustrayant une quantité d'oxygène consommée par oxydation de carbone dans le métal en fusion calculée à partir des seconds résultats de mesure, une oxydation de monoxyde de carbone dans l'installation d'affinage calculée à partir des seconds résultats de mesure et une oxydation de métal d'impureté dans le métal en fusion, à partir d'une quantité d'oxygène fournie à l'installation d'affinage ; et

une quantité d'oxygène consommée par oxydation de fer dans le métal en fusion calculée par les expressions de modèle ; et

une erreur d'entrée-sortie de combustion primaire représentant une différence entre :

une efficacité de combustion primaire représentant un pourcentage d'une quantité d'oxygène consommée par l'oxydation de carbone dans le métal en fusion par rapport à une quantité qui est obtenue en soustrayant une quantité d'oxygène consommée par oxydation de fer et oxydation de métal d'impureté, d'une quantité d'alimentation d'oxygène soufflé par le haut et d'une quantité d'oxygène fournie par la matière première auxiliaire chargée ; et

une valeur standard de l'efficacité de combustion primaire ;

dans lequel la fonction d'évaluation est une somme pondérée comprenant une valeur quadratique de l'erreur d'entrée-sortie de carbone, une valeur quadratique de l'erreur d'entrée-sortie d'oxygène, et une valeur quadratique de l'erreur d'entrée-sortie de combustion primaire en tant que termes.

**6.** Procédé d'estimation de composants de métal en fusion selon la revendication 4, dans lequel l'étape de calcul de correction inclut un calcul des premier, deuxième, troisième et quatrième paramètres de correction de manière à minimiser une fonction d'évaluation ayant des termes comprenant :

une erreur d'entrée-sortie de carbone représentant un rapport entre :

une quantité qui est obtenue en soustrayant la quantité de carbone évacuée de l'installation d'affinage calculée à partir des seconds résultats de mesure, d'une quantité initiale de carbone dans le métal en fusion calculée à partir des premiers résultats de mesure et d'une quantité de carbone fournie à l'installation d'affinage par une matière première auxiliaire chargée ; et
le quatrième paramètre de correction ;

une erreur d'entrée-sortie d'oxygène représentant un rapport entre :

une valeur qui est obtenue en soustrayant une quantité d'oxygène consommée par oxydation de carbone dans le métal en fusion, oxydation de monoxyde de carbone dans l'installation d'affinage et oxydation de métal d'impureté dans le métal en fusion calculée à partir des seconds résultats de mesure, d'une quantité d'oxygène fournie à l'installation d'affinage ; et
une quantité d'oxygène consommée par oxydation de fer dans le métal en fusion calculée par un modèle de réaction physique ; et

une erreur d'entrée-sortie de combustion primaire représentant un rapport entre :

une efficacité de combustion primaire représentant un pourcentage d'une quantité d'oxygène consommée par l'oxydation de carbone dans le métal en fusion par rapport à une quantité qui est obtenue en soustrayant une quantité d'oxygène consommée par oxydation de fer et oxydation de métal d'impureté, d'une quantité d'alimentation d'oxygène soufflé par le haut et d'une quantité d'oxygène fournie par la matière première auxiliaire chargée ; et
une valeur standard de l'efficacité de combustion primaire ;
dans lequel la fonction d'évaluation est une somme pondérée comprenant une valeur quadratique de l'erreur d'entrée-sortie de carbone, une valeur quadratique de l'erreur d'entrée-sortie d'oxygène, et une valeur quadratique de l'erreur d'entrée-sortie de combustion primaire en tant que termes.

**7.** Procédé d'estimation de composants de métal en fusion selon la revendication 5 ou 6, dans lequel une constante représentant un poids de chacun des termes dans la fonction d'évaluation est configurée pour commuter lorsqu'une condition est satisfaite, la condition étant établie sur la base d'au moins certaines parmi des informations d'estimation de composants de métal en fusion et des informations de mesure de gaz d'échappement corrigées calculées avant un temps cible de calcul pendant une chaleur cible de calcul.

**8.** Procédé de production d'un métal en fusion, le procédé comprenant une étape consistant à ajuster une concentration de composants dans un métal en fusion à l'intérieur d'une plage souhaitée sur la base de la concentration de composants dans le métal en fusion estimée en utilisant le procédé d'estimation de composants de métal en fusion selon la revendication 4, dans lequel la quantité d'alimentation en oxygène, le débit d'alimentation en oxygène et le débit de gaz d'agitation sont commandés pour maintenir la concentration de composants du métal en fusion à l'intérieur de la plage souhaitée.

# FIG.1

EXHAUST GAS RESULTS
(FLOW RATE AND
COMPONENTS)

IN-STRUC-TION

CONTROL
TERMINAL

RE-SULTS

VARIOUS TYPES OF
RESULT INFORMATION

MOLTEN METAL COMPONENT
ESTIMATION DEVICE

MATERIAL INPUT-OUT-PUT CALCULATION UNIT

INPUT DEVICE

MANUAL INPUT
(MODEL PARAMETERS, ETC.)

PHYSICAL REACTION
MODEL CALCULATION
UNIT

MODEL DB

CORRECTION
CALCULATION UNIT

CALCULATION
RESULTS

AGITATION
GAS

OUTPUT DEVICE

ESTIMATION
RESULTS

CRT

EP 3 770 279 B1

# FIG.2

START

↓

**S1**
ACQUIRE MEASUREMENT/ANALYSIS
VALUES OF MOLTEN METAL

↓

**S2**
ACQUIRE MANIPULATED VARIABLE
INFORMATION, EXHAUST GAS
INFORMATION, AND AUXILIARY RAW
MATERIAL CHARGE AMOUNT
INFORMATION

↓

**S3**
PERFORM MATERIAL INPUT-OUTPUT
MODEL CALCULATION
(CARBON INPUT-OUTPUT AND OXYGEN
INPUT-OUTPUT)

↓

**S4**
PERFORM PHYSICAL REACTION MODEL
CALCULATION
(FeO GENERATION/REDUCTION
REACTION MODEL)

↓

**S5**
CALCULATE CORRECTION PARAMETERS

↓

**S6**
PERFORM CALCULATION TO ESTIMATE
CARBON CONCENTRATION IN MOLTEN
METAL AND FeO CONCENTRATION IN
SLAG

↓

**S7**
HAS BLOWING PROCESS
ENDED?

NO → (returns to S2)

YES ↓

**S8**
STORE BLOWING RESULTS

↓

END

# FIG.3

$$\frac{dC}{dO_2}$$

$$\left(\frac{dC}{dO_2}\right)_{max}$$

$$\frac{dC}{dO_2} = \left(\frac{dC}{dO_2}\right)_{max}$$

$$\frac{dC}{dO_2} = -b \times T' + c$$

$$\frac{dC}{dO_2} = a \times T'$$

DEGREE OF PROGRESS OF BLOWING T'

TIME WHEN CARBON CONCENTRATION IN MOLTEN METAL HAS REACHED CRITICAL CARBON CONCENTRATION (0.4%)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015131999 A
- JP H09272913 A
- JP 2017089001 A
- JP 2017008349 A